Europäisches Patentamt

European Patent Office

Office européen des brevets

(11) Publication number: **0 063 121**
**B1**

(12) **EUROPEAN PATENT SPECIFICATION**

(45) Date of publication of patent specification: **18.09.85**

(21) Application number: **81901919.1**

(22) Date of filing: **30.06.81**

(86) International application number:
**PCT/EP81/00090**

(87) International publication number:
**WO 82/00130 21.01.82 Gazette 82/03**

(51) Int. Cl.⁴: **B 65 G 1/06**

(54) **SELF-LEVELLING DEVICE.**

(30) Priority: **03.07.80 NL 8003860**

(43) Date of publication of application:
**27.10.82 Bulletin 82/43**

(45) Publication of the grant of the patent:
**18.09.85 Bulletin 85/38**

(84) Designated Contracting States:
**AT CH DE FR GB LI LU NL SE**

(56) References cited:
**EP-A-0 001 316
DE-B-1 247 935
FR-A- 833 872
FR-A-1 287 424
NL-A- 289 616
NL-C- 75 435
US-A-3 993 373**

(73) Proprietor: **BRINKERS, Gerardus Cornelis
Duinvoetlaan 20
NL-2243 GL Wassenaar (NL)**

(72) Inventor: **BRINKERS, Gerardus Cornelis
Duinvoetlaan 20
NL-2243 GL Wassenaar (NL)**

(74) Representative: **Mathol, Heimen et al
EXTERPATENT Willem Witsenplein 4
NL-2596 BK 's-Gravenhage (NL)**

Courier Press, Leamington Spa, England.

## Description

The invention relates to a device for the upward and downward guidance of a platform between two end positions using a translation device which is fixed on or near one side of the platform, allowing raising and lowering of the platform, an arrangement being provided for maintaining the horizontal position of the platform consisting of two inextensible flexible elongate elements, each of which is guided by first and second guiding devices located underneath the platform, the first device being provided on or near that side of the platform where the translation device is located, the second guiding device being located on the opposite side, in such a way that each elongate element is directed upwardly from a level close to the lowest end position and is guided over the first guiding device, then passes underneath the second guiding device and from this point is directed upwardly to a level close to the top extreme position of the platform. Such a device is known from Fig. 7 or 8 of FR—A—833.872. Other embodiments of such a device are known, serving mainly to keep a wide variety of identical utensils, such as dinner plates, within manual reach.

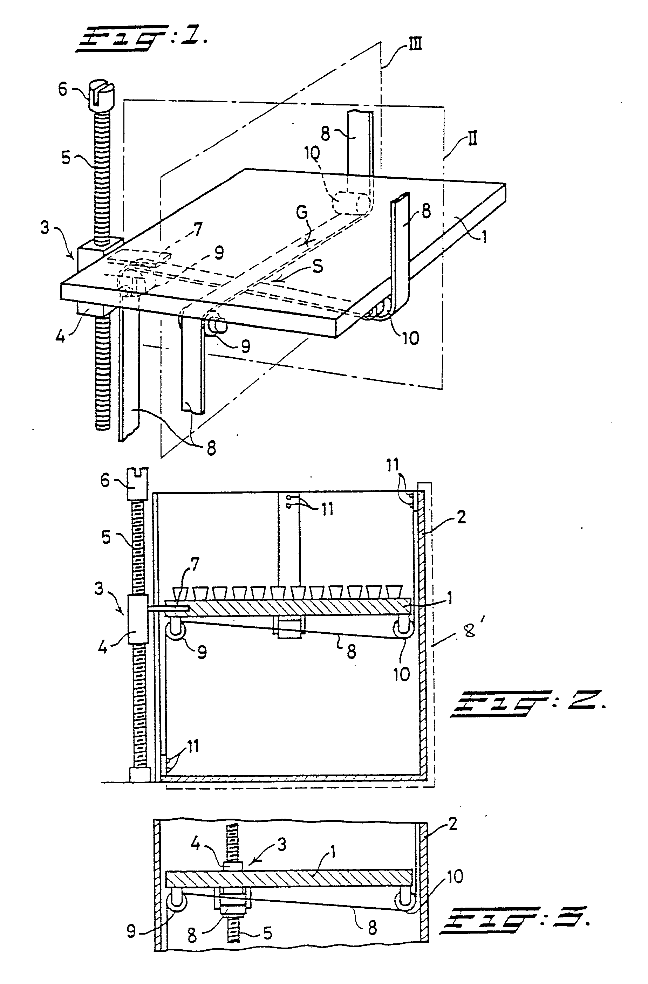

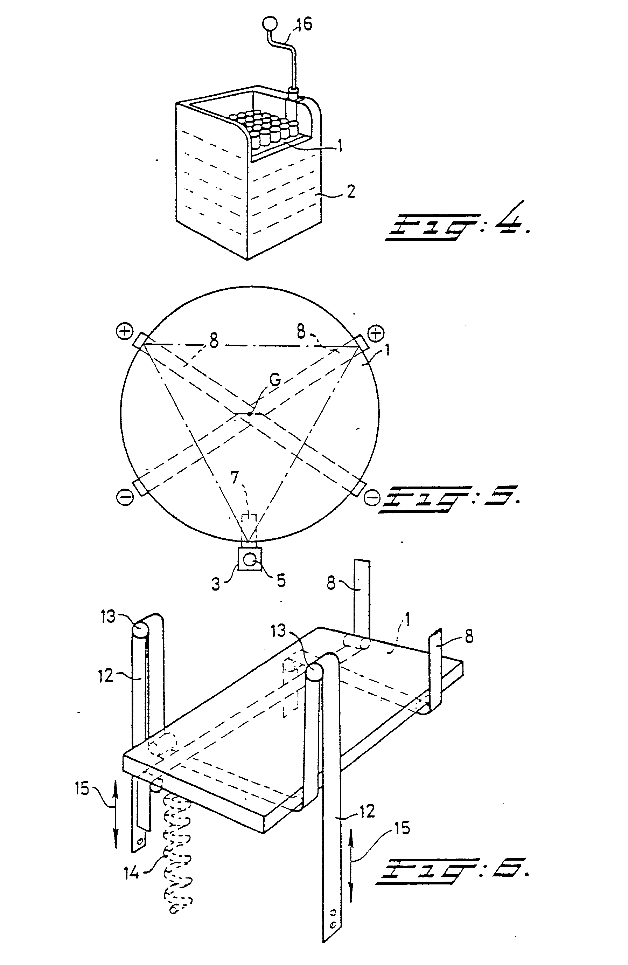

According to FR—A—833 872 this device is used for the vertical up and down movement of a lift bridge for cars. The arrangement for maintaining the horizontal position of the lift-bridge consists according to Fig. 7, of a single translation device in combination with two parallel elongate elements and a third elongate element perpendicular to the two elements. The embodiment shown in Fig. 8 of said French Patent also utilizes three elements but only one translation device. According to Figs. 1—6 a further embodiment is known comprising two translation devices in combination with two parallel elongate elements.

Another embodiment shown in Fig. 1 and 6 utilizes only two parallel elongate elements. However, for avoiding a slanting position two translation devices are needed.

When only a single translation device is employed for guiding the platform, up to now three elongate elements have been needed because otherwise the problem arises that in the event of unbalanced loading the platform has the tendency to adopt a slanting position with the result that jamming can occur whilst at the same time the objects present on the platform can slip and hence increase the tendency of the platform to adopt a sloping position. This has then to be levelled.

The invention starts from a device described in the first paragraph of this description.

The present invention aims at providing a simple structural solution for the said problem, to which end the device in accordance with the invention differs in that it provides facilities for maintaining the horizontal state of the platform, with a single translation device and only two elongate elements are employed, the portions lying underneath the platform crossing each other and that — viewed from the top — the translation element and the second guiding device form the corners of a triangle within which the centre of gravity of the platform is located. By these means the platform is only supported at one position along its periphery by the translation device, whilst on the opposite side the platform is supported by two upwardly directed sections of the inextensible flexible elongate elements.

It should be noted that the expression "elongate element" includes also a belt, cable or chain, which is a flat member occupying little space, provided that this is flexible and inextensible. The expression "crossing" does not necessarily mean a contact between both portions of the elongate elements underneath the platform, but also covers a situation whereby there exists a short distance between said portions. The indicated triangular configuration guarantees the stability of the platform, even during the positive upward and downward movement of the platform. Since the said arrangement consists of only two inextensible elements, the translation device which is effective against the underside of the platform can restrict itself to exercising a vertical force and no bending or twisting couples will be exerted upon said device.

The invention relates particularly to a device, the translation element of which consists of a threaded rod cooperating with a nut, such as employed in the packaging unit according to European Patent 0 001 316. Herein the respective platform has a rectangular shape. In accordance with the invention, the said two elongate elements are located in two mutually perpendicular planes, whereby the element in one plane interacts with the translation device positioned near a corner of the platform and the cable-like elements cross each other at a point which is located closer to the two sections of both elements facing downwardly underneath the platform than to the upwardly directed sections located above the platform.

In this embodiment also a single translation device will suffice and this engages eccentrically with the platform, this eccentric loading being compensated for by the upwardly directed sections of the elongate elements which are located as far as possible away from the translation device. The triangular configuration thus obtained favourably influences the stability of the platform.

In a further embodiment of the invention the translation device is formed by at least one elastic rubber band on which the platform rests, said band proceeding upwardly on either side of said platform and proceeding downwardly via rollers to the level of the lowest extreme position. The rubber band has a considerable length and can thus serve to carry the platform from the topmost level (in the unloaded state) down to the lowest level (in the fully loaded state).

Figure 1 is a perspective view of the essential components of the device and the arrangement employed therewith.

Figures 2 and 3 are sections through planes II and III respectively, in Fig. 1.

Figures 4—6 are three very schematical further embodiments of the arrangement in accordance with the invention.

Figure 1 is a rectangular platform or loading table 1 which can be designed as a flat plane or any desired flat rigid and possible hollow construction. This loading table 1 will usually be present as carrying platform in an enclosure 2, e.g. designed as a box-shaped packaging unit.

The platform 1 interacts with a translation device 3 which in the embodiment of Figs. 1—3 is designed as a nut 4, interacting with a threaded rod 5, which at its top end carries a head 6. This head is designed to cooperate with a lever 16, shown in Fig. 4, for rotating the threaded rod and the resultant upward or downward movement of the nut 4. The drive for the threaded rod can naturally also be undertaken in a different way and, for example, be provided by a motor using an interposed reduction drive.

The platform 1 rests on the translation device 3, for which purpose the nut 4 is provided with a lip 7 which is fastened to the platform 1, or possibly is inserted into the latter. This lip 7 possesses a limited length, so that only that portion of the platform 1 adjacent to the translation device 2 is engaged. The invention provides an arrangement by means of which the portion of the platform 1 which is far removed from the translation device 3 is so carried and supported that during the upward and downward movement of the translation device 3, it maintains the horizontal position of the platform 1.

This arrangement consists of two mutually crossing inextensible belt-like elements 8, each of which passes around two guiding devices 9, 10 located underneath the platform 1. One guiding device 9 is located on the side of the platform 1 where the translation device 3 is located and the second guiding device 10 is on the opposite side. Each element 8 is now passed in such a way past the guiding devices 9, 10 that the element proceeds upwardly from a level near the underside of the enclosure 2 and is guided upwardly and over the first-mentioned guiding device 9. Subsequently the element 8 extends underneath the platform 1, is thereupon passed underneath the second guide device 10 and then from this point proceeds upwardly to a level at the top face of the enclosure 2.

As shown in the embodiments of Figs. 1—3 the inextensible belt-like element 8 is of restricted length and is at its ends fastened close to the bottom and top side respectively, of the enclosure 2. However, it is also feasible to make the element 8 endless (8' in Fig. 2). In that case the fastening devices 11 can be dispensed with. By means of this arrangement the horizontal position of the platform 1 is maintained as the lip 7 provides a support for one side, and the upwardly facing sections of the elements 8 with the guide device 10 for the opposite side of the platform.

The embodiment of Figs. 1—3 is provided with two inextensible elements 8 which are located in two mutually perpendicular planes II and III. The element 8 in the first plane II interacts with the translation device 3 (Fig. 2). It should be noted that in each embodiment the plane II is located eccentrically i.e. that this plane does not pass through the centre of gravity G of the platform 1 (See Fig. 1). The element 8 from the second plane III is in this embodiment located in the centre area of the platform 1. The elements 8 cross each other at a location S which is located closer to the two portions directed downwardly underneath the platform of the two elements 8 than to the sections directed upwardly above the platform. This is shown most clearly in Fig. 1.

Fig. 4 illustrates a practical embodiment wherein, in a manner similar to the embodiment of Figs. 1—3, a single translation device 3 is used, whereupon a lever 16 is placed. In this case the belt-like elements 8 are accommodated within the enclosure 2. Due to the flat shape of three belts 8 very little additional space is required, whilst the products lying upon the platform cannot be damaged. The use of the two inextensible elements 8 as described hereinbefore ensures the maintenance of a horizontal position for the platform 1 with the trays loaded with articles stacked upon said platform in the two mutually vertical directions of the platform during the raising and lowering of the platform.

In the variant of Fig. 5 the platform 1 does not possess a rectangular or polygonal shape, but is circular. The elements 8 which interact with the single translation device 3 are lying in two mutually perpendicular planes of the platform 1. In order to be able to differentiate between the ascending and descending sections of the elements 8 in the top view of said Fig. 5, this diagram is annotated at the appropriate positions with a plus (+) sign and a minus (−) sign respectively. The triangular configuration of the support point is denoted with a dotted line.

The embodiment of Fig. 6 does not comprise a positively displaceable translation device, as used in the other variations. The translation device consists in this embodiment of an elastic rubber band 12 on which the platform 1 rests. This band then proceeds upwardly on either side of the platform, via a roller 13, proceeding downwardly until being level with the lowest extreme position of the platform.

As a result the latter embodiment appertains to the type of levelling devices, that is a device on which a large number of objects, e.g. packaged foodstuffs, can be placed. The strength of the band 12 is so matched to the weight of the objects that the topmost layer is always located at the same level, independent of the load on the platform.

The considerable length of the band 12 renders a substantial displacement distance possible for the platform 1. The elements 8 are incorporated in a manner similar to that employed in Fig. 1.

Instead of the rubber band 12 a spring 14 can be employed. In Fig. 6 too the triangular configuration is encountered.

It should be noted that provisions can be made for increasing or reducing the tension of the rubber band 12. In this way the platform can be raised or precisely lowered to an extra extent if a requirement for this should exist (See arrow 15 in Fig. 6).

Furthermore it should be noted that the triangular configuration according to the invention avoids the occurrence of a considerable bending couple in the nut 4, so that the lever arm of the load effective on the lip 7 can be taken extremely short, as opposed to the state of the art.

It is obvious that the scope of the translation device 3 is not restricted to a threaded rod with nut, but can also exhibit different embodiments.

## Claims

1. Device for the upward and downward guidance of a platform (1) between two end positions using a translation device (3) which is fixed on or near one side of the platform, allowing raising and lowering of the platform, an arrangement being provided for maintaining the horizontal position of the platform consisting of two inextensible flexible elongate elements (8), each of which is guided by first and second guiding devices (9, 10) located underneath the platform, the first devices (9) being provided on or near that side of the platform where the translation device (3) is located, the second guiding devices (10) being located on the opposite side, in such a way that each elongate element (8) is directed upwardly from a level close to the lowest end position and is guided over the first guiding device (9) then passes underneath the second guiding device (10) and from this point is directed upwardly to a level close to the top extreme position of the platform, characterized in that two elongate elements (8) are employed, the portions lying underneath the platform (1), crossing each other, and that — viewed from the top — the translation device and the second guiding devices (10) form the corners of a triangle within which the centre of gravity (G) of the platform (1) is located.

2. Device according to claim 1, wherein the platform has a rectangular shape, characterized in that the two elongate elements (8) are located in two mutually perpendicular planes (II/III) and that the element (8) in one plane (II) interacts with the translation device positioned near a corner of the platform, whereby the elements cross each other at a point which is located closer to the two sections of both elements facing downwardly underneath the platform than to the upwardly directed sections located above the platform.

3. Device according to claim 1, in which the platform has a round shape, characterized in that the elongate elements (8) are positioned in two mutually perpendicular diagonal planes of the platform (1), the downwardly facing sections of both elements lying at either side of the translation device (3).

4. Device according to claim 1, characterized in that the translation device is formed by at least one elastic rubber band (12) on which the platform rests, said band proceeding upwardly on either side of said platform and proceeding downwardly via rollers (13) to the level of the lowest extreme position.

## Revendications

1. Dispositif de guidage vers le haut et vers le bas d'une plate-forme (1) entre deux positions limites comportant un organe de translation (3) fixé sur ou à proximité d'un côté de la plate-forme permettant le mouvement ascendant et descendant de ladite plate-forme, un système étant prévu pour le maintien de la plate-forme dans une position horizontale consistant en deux éléments (8) flexibles allongés et inextensibles, chacun de ces éléments étant guidés par des premier et des seconds moyens de guidage (9, 10), les premiers moyens de guidage (9) étant situés sur ou à proximité du côté de la plate-forme ou est fixé l'organe de translation (3), les seconds moyens de guidage étant situés sur la côté opposé de telle sorte que chaque élément (8) allongé est dirigé vers le haut à partir d'une position très proche de la position limite basse, est guidé sur le premier moyen de guidage (9) puis passe sous le second moyen de guidage (10) et, à partir de ce point, est dirigé vers le haut jusqu'à une position très proche de la position limite haute de la plate-forme, caractérisé en ce qu'il comporte deux éléments (8) allongés dont les parties situées sous la plate-forme (1) se croisent et en ce que — vu de dessus — l'organe de translation (3) et les seconds moyens de guidage (10) forment les sommets d'un triangle à l'intérieur duquel se trouve le centre de gravité (G) de la plate-forme (1).

2. Dispositif selon la revendication 1, où la plate-forme est rectangulaire, caractérisé en ce que les deux éléments (8) allongés sont situés dans deux plans (II/III) mutuellement perpendiculaires et en ce que l'élément (8) situé dans le plan (II) coopère avec l'organe de translation (3) disposé à proximité d'un angle de la plate-forme, cette disposition ayant pour conséquence que les éléments se croisent en un point situé plus près des deux parties des deux éléments tournées vers le bas sous la plate-forme que des éléments dirigés vers le haut situés au-dessus de la plate-forme.

3. Dispositif selon la revendication 1, où la plate-forme est circulaire, caractérisé en ce que les éléments (8) sont disposés dans deux plans diagonaux mutuellement perpendiculaires de la plate-forme (1), les parties de deux éléments tournées vers le bas étant situées à chaque côté de l'organe de translation (3).

4. Dispositif selon la revendication 1, caractérisé en ce que l'organe de translation (3) est constitué par au moins un ruban de caoutchouc élastique (12) sur lequel la plate-forme repose, ledit ruban s'étendant vers le haut de chaque côté de ladite plate-forme et vers le bas par l'intermédiaire de rouleaux (13) jusqu'au niveau de la position limite basse.

**Patentansprüche**

1. Vorrichtung zum Aufwärts- und Abwärtsführen einer Platte (1) zwischen zwei Endstellungen unter Verwendung einer Parallelverschiebevorrichtung (3), die an oder in der Nähe einer Seite der Platte befestigt ist, das Anheben und Absenken der Platte erlaubt, wobei eine Anordnung vorgesehen ist, um die horizontale Lage der Platte beizubehalten, die aus zwei nicht ausdehnbaren, flexiblen, langgestreckten Elementen (8) besteht, von denen jedes von unterhalb der Platte befindlichen, ersten und zweiten Führungsvorrichtungen (9, 10) geführt ist, wobei die ersten Vorrichtungen (9) an oder in der Nähe derjenigen Seite der Platte vorgesehen sind, wo sich die Parallelverschiebevorrichtung (3) befindet, die zweiten Führungsvorrichtungen (10) sich an der entgegengesetzten Seite befinden, sodaß jedes langgestreckte Element (8) von einem Niveau in der Nähe der untersten Endstellung nach oben gerichtet und über die erste Führungsvorrichtung (9) geführt ist und dann unterhalb der zweiten Führungsvorrichtung (10) verläuft und von diesem Punkt nach oben zu einem Niveau in der Nähe der oberen äußersten Stellung der Platte gerichtet ist, dadurch gekennzeichnet, daß zwei langgestreckte Elemente (8) verwendet sind, wobei die unterhalb der Platte (1) liegenden Bereiche einander kreuzen, und daß, von oben gesehen, die Parallelverschiebevorrichtung und die zweiten Führungsvorrichtungen (10) die Ecken eines Dreiecks bilden, innerhalb dessen der Schwerpunkt (G) der Platte (1) liegt.

2. Vorrichtung nach Anspruch 1, bei der die Platte eine rechteckige Gestalt hat, dadurch gekennzeichnet, daß die zwei langgestreckten Elemente (8) in zwei zueinander rechtwinkligen Ebenen (II/III) liegen, und daß das Element (8) in einer Ebene (II) mit der Parallelverschiebevorrichtung zusammenwirkt, die in der Nähe einer Ecke der Plattform angeordnet ist, wodurch die Elemente einander an einer Stelle kreuzen, die den beiden Abschnitten beider Elemente näher liegt, welche unterhalb der Platte nach unten weisen, als den nach oben gerichteten Abschnitten, die sich oberhalb der Platte befinden.

3. Vorrichtung nach Anspruch 1, bei der die Platte eine runde Gestalt hat, dadurch gekennzeichnet, daß die langgestreckten Elemente (8) in zwei zueinander rechtwinkligen, diagonalen Ebenen der Platte (1) angeordnet sind, wobei die nach unten weisenden Abschnitte beider Elemente zu beiden Seiten der Parallelverschiebevorrichtung (3) liegen.

4. Vorrichtung nach Anspruch 1, dadurch gekennzeichnet, daß die Parallelverschiebevorrichtung von mindestens einem elastischen Gummiband (12) gebildet ist, auf dem die Platte ruht, wobei das Band an beiden Seiten der Platte nach oben verläuft und über Rollen (13) auf die Höhe der untersten äußersten Stellung nach unten weiterläuft.

0 063 121

FIG : 1.

FIG : 2.

FIG : 3.

_Fig: 4._

_Fig: 5._

_Fig: 6._